# EUROPÄISCHE PATENTSCHRIFT

(11) **EP 4 328 483 B1**
(45) Veröffentlichungstag und Bekanntmachung des Hinweises auf die Patenterteilung: **15.10.2025**
(21) Anmeldenummer: 22192106.7
(22) Anmeldetag: 25.08.2022
(51) Int. Cl.: F21S 41/141, F21S 41/19, B23P 19/04, B23P 19/10, B62D 65/14, B60Q 1/00, F21S 41/145

(54) **VERFAHREN ZUR AUTOMATISIERTEN ASSEMBLIERUNG EINES LICHTMODULS FÜR EINEN KRAFTFAHRZEUGSCHEINWERFER**
METHOD FOR AUTOMATICALLY ASSEMBLING A LIGHT MODULE FOR A MOTOR VEHICLE HEADLIGHT
PROCÉDÉ D'ASSEMBLAGE AUTOMATISÉ D'UN MODULE D'ÉCLAIRAGE POUR UN PHARE DE VÉHICULE AUTOMOBILE

(43) Veröffentlichungstag der Anmeldung: 28.02.2024
(73) Patentinhaber: ZKW Group GmbH, 3250 Wieselburg (AT)
(72) Erfinder: Zeuner, Markus, 3240 Mank (AT); Hacker, Alexander, 3150 Wilhelmsburg (AT); Schmidberger, Fabian, 3204 Kirchberg an der Pielach (AT)
(74) Vertreter: Patentanwaltskanzlei Matschnig & Forsthuber OG

(56) Entgegenhaltungen:
- EP-A1- 3 021 040
- EP-A1- 3 299 710
- EP-A1- 3 301 351
- EP-A1- 3 789 280
- WO-A1-2021/044980
- DE-A1- 2 715 273
- FR-A1- 3 046 660
- JP-A- 2018 010 783

## Beschreibung

Die Erfindung betrifft ein Verfahren zur automatisierten Assemblierung eines Lichtmoduls für einen Kraftfahrzeugscheinwerfer mittels eines Assemblierungsroboters, wobei das Verfahren die folgenden chronologischen Schritte umfasst:
a) Bereitstellen der folgenden Komponenten:
   - eine lichtemittierende Baugruppe, umfassend
      * eine Leiterplatte,
      * ein Leuchtmittel zur Erzeugung und Abstrahlung von Licht, wobei das Leuchtmittel auf der Leiterplatte angeordnet ist,
      * einen Trägerkörper, auf welchem die Leiterplatte angeordnet ist, wobei an dem Trägerkörper ein erster Halteabschnitt ausgebildet ist, wobei der erste Halteabschnitt derart ausgestaltet und dazu eingerichtet ist, von einer Greifvorrichtung eines Assemblierungsroboters aufgegriffen zu werden,
   - eine Optikvorrichtung, welche dazu eingerichtet ist, aus dem Licht des Leuchtmittels der lichtemittierenden Baugruppe in einem assemblierten Zustand des Lichtmoduls zumindest eine Lichtfunktion zu bilden, wobei die Optikvorrichtung zur Ausbildung der zumindest einen Lichtfunktion zumindest ein optisch wirksames Element, welches in einem Gehäuse der Optikvorrichtung aufgenommen ist, aufweist, wobei das Gehäuse einen Lichteintrittsbereich aufweist, durch welchen von dem Leuchtmittel abgestrahltes Licht in das Innere des Gehäuses auf das zumindest eine optisch wirksame Element trifft und zur Ausbildung der zumindest einen Lichtfunktion mit dem zumindest einen optisch wirksamen Element wechselwirkt, wobei das Gehäuse einen Lichtaustrittsbereich aufweist, aus welchem das die zumindest eine Lichtfunktion ausbildende Licht, nach dessen Wechselwirkung mit dem zumindest einen optisch wirksamen Element austritt,
   - eine Steckvorrichtung, welche ein Steckerelement und ein zu dem Steckerelement korrespondierend ausgestaltetes Gegensteckerelement aufweist, wobei das Steckerelement an der lichtemittierenden Baugruppe und das Gegensteckerelement an der Optikvorrichtung angeordnet ist, wobei das Steckerelement mit dem Gegensteckerelement zur Befestigung der lichtemittierenden Baugruppe an der Optikvorrichtung in Eingriff gebracht werden kann.

Im Stand der Technik sind Verfahren zur Assemblierung von Lichtmodulen bekannt. Nachteiligerweise benötigen die bekannten Assemblierungsverfahren eine Vielzahl von Schritten, welche üblicherweise teilweise automatisiert und teilweise manuell durchgeführt werden. Folgt ein automatisierter Schritt einem manuellen (oder umgekehrt), kommt es häufig zu prozesstechnischen Verzögerungen. Das Dokument EP 3 301 351 A1 offenbart eine Leuchtsignalvorrichtung, die mittels einer Matrix aus Mikrospiegeln Leuchtpiktogramme erzeugt.

Die Aufgabe der vorliegenden Erfindung besteht darin, die Nachteile des Standes der Technik zu lindern bzw. zu beseitigen. Die Erfindung setzt sich daher insbesondere zum Ziel, ein verbessertes Verfahren zur automatisierten Assemblierung eines Lichtmoduls zu schaffen.

Diese Aufgabe wird durch ein Verfahren mit den Merkmalen von Anspruch 1 gelöst.

Bevorzugte Ausführungen sind in den abhängigen Ansprüchen angegeben.

Erfindungsgemäß umfasst das Verfahren die weiteren Schritte:
b) Bereitstellen eines Assemblierungsroboters zur automatisierten Assemblierung des Lichtmoduls, wobei der Assemblierungsroboter eine Greifvorrichtung aufweist, wobei die Greifvorrichtung einen Greifabschnitt aufweist, welcher korrespondierend zu dem ersten Halteabschnitt des Trägerkörpers ausgebildet ist,
c) Assemblierung des Lichtmoduls durch Befestigen der lichtemittierenden Baugruppe an der Optikvorrichtung durch den Assemblierungsroboter, wobei das Befestigen folgende Schritte umfasst:
   * Aufgreifen der lichtemittierenden Baugruppe mit der Greifvorrichtung, durch das in Eingriff bringen des Greifabschnitts der Greifvorrichtung mit dem ersten Halteabschnitt des Trägerkörpers,
   * Positionieren der aufgegriffenen lichtemittierenden Baugruppe an der Optikvorrichtung derart, dass das Steckerelement der lichtemittierenden Baugruppe mit dem Gegensteckerelement der Optikvorrichtung in Eingriff gebracht werden kann,
   * Zusammenstecken der Steckvorrichtung mittels des Assemblierungsroboters durch das in Eingriff bringen des Steckerelements mit dem Gegensteckerelement, wobei während dem Zusammenstecken die lichtemittierenden Baugruppe von der Greifvorrichtung gehalten und entlang einer Einsteckrichtung bewegt wird, wobei im zusammengesteckten Zustand der Steckvorrichtung das Steckerelement in einer Endposition relativ zu dem Gegensteckerelement angeordnet ist, wobei das Steckerelement und das Gegensteckerelement derart ausgestaltet und dazu eingerichtet sind, dass in der Endposition der Eingriff des Steckerelements mit dem Gegensteckerelement derart ist, dass die lichtemittierende Baugruppe gegen eine Verschiebung entgegen der Einsteckrichtung gesichert ist,

wobei das Lichtmodul (1) eine Steuervorrichtung (8) aufweist, welche dazu eingerichtet ist, das zumindest eine optisch wirksame Element der Optikvorrichtung (4) sowie das Leuchtmittel (2a) der lichtemittierenden Baugruppe (2) zur Ausbildung der zumindest einen Lichtfunktion anzusteuern, wobei das Steckerelement (5a) und das Gegensteckerelement (5b) jeweils elektrische Verbindungsmittel aufweisen, welche dazu eingerichtet sind, im zusammengesteckten Zustand der Steckvorrichtung (5) einen elektrischen Kontakt zwischen der lichtemittierenden Baugruppe (2) und der Steuervorrichtung (8) herzustellen,
wobei die Steuervorrichtung (8) mit dem Gegensteckerelement (5b) über weitere elektrische Verbindungsmittel elektrisch verbunden ist, um im assemblierten Zustand des Lichtmoduls (1) Steuersignale an die Optikvorrichtung (4) und die lichtemittierende Baugruppe (2) zu senden.

Dadurch ergibt sich der Vorteil, dass das Zusammenstecken des Steckerelements mit dem Gegensteckerelement (und somit die Assemblierung des Lichtmoduls) automatisiert und damit besonders effizient erfolgt. Insbesondere muss die Steckvorrichtung nicht manuell zusammengesteckt und der sichere Zusammenhalt der Steckverbindung nicht überprüft werden, was wiederum Zeit und Kosten spart. Es kann vorgesehen sein, dass eine elektrische Verbindung, welche im assemblierten Zustand des Lichtmoduls zwischen den Komponenten des Lichtmoduls herrscht, mit einem Funktionstest überprüft wird. Im Zuge dieser Überprüfung kann auch die Funktion des lichtemittierenden Elements überprüft werden. Es kann auch vorgesehen sein, dass nach dem Zusammenstecken der Steckvorrichtung eine Feinjustage zur optimalen Ausrichtung der lichtemittierenden Baugruppe relativ zu der Optikvorrichtung durchgeführt wird. Nach der Feinjustage kann die lichtemittierende Baugruppe relativ zu der Optikvorrichtung exakt positioniert werden, sodass durch die exakte Positionierung Ungenauigkeiten, welche beispielsweise im Rahmen des Herstellprozesses entstanden sind, ausgeglichen werden. Es kann vorgesehen sein, dass eine Fixierung der lichtemittierenden Baugruppe an dem Gehäuse der Optikvorrichtung mittels eines Befestigungselements erfolgt. Das Befestigungselement kann beispielsweise eine Schraubverbindung, eine Nietverbindung, eine Klebeverbindung o.Ä. sein. Das optisch wirksame Element kann beispielsweise ein DMD-Element umfassen, welches dazu eingerichtet ist, aus dem Licht des Leuchtmittels zumindest eine, vorzugsweise mehrere unterschiedliche Lichtfunktionen zu realisieren. Ein Element (bzw. eine Oberfläche eines Elements) ist insbesondere dann optisch wirksam im Sinne dieser Offenbarung, wenn das Element die Richtung des Lichts, das bei bestimmungsgemäßem Gebrauch mit dem Element wechselwirkt, in Bezug auf seine Richtung und/oder seine Strahl- bzw. Bündelcharakteristik verändert. In dieser Offenbarung ist der assemblierte (bzw. zusammensteckte) Zustand jener Zustand, in dem die lichtemittierende Baugruppe mit der Optikvorrichtung verbunden ist, wobei diese Verbindung durch die zusammengesteckte Steckvorrichtung erfolgt. Im assemblierten Zustand ist das Lichtmodul insbesondere funktionsbereit und dazu eingerichtet, die zumindest eine Lichtfunktion zu erzeugen. Im assemblierten Zustand ist insbesondere die lichtemittierende Baugruppe an der Optikvorrichtung fixiert bzw. ist die Verbindung zwischen der lichtemittierenden Baugruppe und der Optikvorrichtung gegen ein Lösen der Verbindung gesichert, wobei diese Sicherung durch die in Eingriff befindliche Steckvorrichtung ermöglicht wird. Als Leiterplatte im Sinne dieser Offenbarung kann ganz allgemein auch ein beliebiger Schaltungsträger verstanden werden.

Es kann vorgesehen sein, dass der Trägerkörper ein Kühlelement zur Kühlung des Leuchtmittels aufweist, wobei der erste Halteabschnitt an dem Kühlelement angeordnet ist. Das Kühlelement und der Trägerkörper können insbesondere einstückig ausgebildet sein. Dadurch kann der Aufbau des Lichtmoduls vereinfacht werden.

Es kann vorgesehen sein, dass der Lichteintrittsbereich des Gehäuses als Lichteintrittsöffnung ausgestaltet ist, welche mit der lichtemittierenden Baugruppe derart korrespondierend ausgebildet ist, dass im assemblierten Zustand des Lichtmoduls mit dem Leuchtmittel abgestrahltes Licht durch die Lichteintrittsöffnung hindurch auf das zumindest eine optisch wirksame Element trifft. Es kann vorgesehen sein, dass der Lichtaustrittsbereich des Gehäuses als Lichtaustrittsöffnung ausgestaltet ist, wobei das die Lichtfunktion ausbildende Licht (bzw. das Lichtbündel) durch die Lichtaustrittsöffnung aus dem Gehäuse austritt. Die Lichteintrittsöffnung bzw. der Lichteintrittsbereich können an einer ersten Gehäuseaußenseite und die Lichtaustrittsöffnung bzw. der Lichtaustrittsbereich können an einer von der ersten Gehäuseaußenseite unterschiedlichen zweiten Gehäuseaußenseite angeordnet sein. Bevorzugt sind der Lichteintrittsbereich und der Lichtaustrittsbereich an dem Gehäuse derart angeordnet, dass im assemblierten Zustand ein in das Gehäuse eintretendes Lichtbündel (welches von dem Leuchtmittel abgestrahlt wird) und ein aus dem Gehäuse austretendes Lichtbündel (welches von dem optisch wirksamen Element emittiert wird) einen spitzen Winkel zueinander aufweisen.

Es kann vorgesehen sein, dass die Leiterplatte der lichtemittierenden Baugruppe eine Oberseite und eine der Oberseite gegenüberliegende Unterseite aufweist, wobei das Leuchtmittel und das Steckerelement an der Oberseite angeordnet sind und der Trägerkörper an der Unterseite angeordnet ist. Der Trägerkörper kann als Kühlelement ausgebildet sein, wobei bevorzugt das Leuchtmittel und das Steckerelement an der Oberseite der Leiterplatte angeordnet sind und das Kühlelement an der Unterseite der Leiterplatte angeordnet ist. Es kann vorgesehen sein, dass zwischen dem Kühlelement und der Unterseite der Leiterplatte eine Wärmeleitschicht angeordnet ist, welche ein wärmeleitendes Material aufweist, wodurch die Wärmeleitung zwischen der Leiterplatte und dem Kühlelement erhöht wird.

Erfindungsgemäß weist das Lichtmodul eine Steuervorrichtung auf, welche dazu eingerichtet ist, das zumindest eine optisch wirksame Element der Optikvorrichtung sowie das Leuchtmittel der lichtemittierenden Baugruppe zur Ausbildung der zumindest einen Lichtfunktion anzusteuern.

Es kann vorgesehen sein, dass die Steuervorrichtung eine weitere Leiterplatte umfasst, welche insbesondere an dem Gehäuse der Optikvorrichtung befestigt ist.

Erfindungsgemäß weisen das Steckerelement und das Gegensteckerelement jeweils elektrische Verbindungsmittel auf, welche dazu eingerichtet sind, im zusammengesteckten Zustand der Steckvorrichtung einen elektrischen Kontakt zwischen der lichtemittierenden Baugruppe und der Steuervorrichtung herzustellen, wobei die Steuervorrichtung mit dem Gegensteckerelement über weitere elektrische Verbindungsmittel elektrisch verbunden ist, um im assemblierten Zustand des Lichtmoduls Steuersignale an die Optikvorrichtung und die lichtemittierende Baugruppe zu senden. Die Steuersignale sind insbesondere Signale, welche die Optikvorrichtung und das Leuchtmittel zur Ausbildung der zumindest einen Lichtfunktion veranlassen.

Es kann vorgesehen sein, dass die weiteren elektrischen Verbindungsmittel innerhalb einer Kabelaufnahmevorrichtung angeordnet sind, wobei die Kabelaufnahmevorrichtung einen zweiten Halteabschnitt aufweist, welcher derart ausgestaltet und dazu eingerichtet ist, mit der Greifvorrichtung des Assemblierungsroboters in Eingriff gebracht zu werden, um die Kabelaufnahmevorrichtung mit der Greifvorrichtung aufzugreifen. Der erste Halteabschnitt und der zweite Haltabschnitt können gleichartig ausgestaltet (bzw. geformt) sein.

Es kann vorgesehen sein, dass die Kabelaufnahmevorrichtung an einer Gehäuseaußenseite, insbesondere an einer dritten Gehäuseaußenseite, des Gehäuses angeordnet ist.

Es kann vorgesehen sein, dass die Kabelaufnahmevorrichtung eine bestimmte Festigkeit aufweist, welche einer vorgegebenen Griffkraft der Greifvorrichtung standhält, sodass ein Aufgreifen der Kabelaufnahmevorrichtung mit der Greifvorrichtung unter Einwirkung der vorgegebenen Griffkraft beschädigungsfrei möglich ist, wobei vorzugsweise der Assemblierungsroboter dazu eingerichtet ist, die aufgegriffene Kabelaufnahmevorrichtung an dem Gehäuse mittels eines Befestigungsmittels zu assemblieren. Das Befestigungsmittel kann eine weitere Steckvorrichtung umfassen, wobei ein weiteres Steckerelement der weiteren Steckvorrichtung mit einem weiteren Gegensteckerelement der weiteren Steckvorrichtung in Eingriff gebracht werden kann, um die Kabelaufnahmevorrichtung an dem Gehäuse zu befestigen. Es kann vorgesehen sein, dass die Kabelaufnahmevorrichtung des Weiteren eine bestimmte Festigkeit aufweist, welche nicht nur der vorgegebenen Griffkraft der Greifvorrichtung standhält, sodass ein Aufgreifen der Kabelaufnahmevorrichtung mit der Greifvorrichtung unter Einwirkung der vorgegebenen Griffkraft beschädigungsfrei möglich ist, sondern ebenso der Steckkraft, welche von der Greifvorrichtung aufgebracht wird um die Kabelaufnahmevorrichtung mittels der dafür vorgesehenen Steckvorrichtung zu kontaktieren, beschädigungsfrei stand hält.

Es kann vorgesehen sein, dass das Steckerelement ein erstes Arretierungsmittel und das Gegensteckerelement ein zweites Arretierungsmittel aufweist, wobei im zusammengesteckten Zustand der Steckvorrichtung das erste Arretierungsmittel mit dem zweiten Arretierungsmittel derart zusammenwirkt, dass die Position der lichtemittierenden Baugruppe relativ zu der Optikvorrichtung fixiert ist.

Es kann vorgesehen sein, dass das erste Arretierungsmittel als Rastnase und das zweite Arretierungsmittel als Rastnasenaufnahme ausgebildet ist, oder das erste Arretierungsmittel als Rastnasenaufnahme und das zweite Arretierungsmittel als Rastnase ausgebildet ist, wobei im zusammengesteckten Zustand der Steckvorrichtung die Rastnase in der Rastnasenaufnahme aufgenommen ist, um die Position der lichtemittierenden Baugruppe relativ zu der Optikvorrichtung zu fixieren.

Es kann vorgesehen sein, dass die Rastnase des ersten Arretierungsmittels oder des zweiten Arretierungsmittels mit einem Federelement derart vorgespannt ist, dass beim Zusammenstecken der Steckvorrichtung durch den Assemblierungsroboter das Steckerelement gegen die Federkraft des Federelements in das Gegensteckerelement gesteckt wird, wobei im zusammengesteckten Zustand die Federkraft des Federelements die Rastnase in die Rastnasenaufnahme drückt.

Es kann vorgesehen sein, dass nach dem Positionieren der lichtemittierenden Baugruppe an der Optikvorrichtung und vor dem Zusammenstecken der Steckvorrichtung durch den Assemblierungsroboter die Position der lichtemittierenden Baugruppe relativ zu der Optikvorrichtung mit einer Überprüfungsvorrichtung überprüft wird, und, wenn die Position von einer vorgegebenen Soll-Position abweicht, der Assemblierungsroboter die Position derart ändert, dass die Soll-Position eingenommen wird.

In einem nicht erfindungsgemäßen Ausführungsbeispiel ist ein Kraftfahrzeugscheinwerfer vorgesehen, umfassend ein Lichtmodul, welches mit einem Verfahren zur automatisierten Assemblierung assembliert wurde.

Im Rahmen dieser Beschreibung sind die Begriffe "oben", "unten", "horizontal", "vertikal" als Angaben der Ausrichtung zu verstehen, wenn das Lichtmodul in normaler Benutzungsstellung angeordnet ist, nachdem es in einem Kraftfahrzeugscheinwerfer eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Ansicht eines Ausführungsbeispiels eines Lichtmoduls vor dessen Assemblierung mit einem erfindungsgemäßen Verfahren;
Fig. 2 eine weitere Ansicht des Lichtmoduls gemäß Fig. 1;
Fig. 3 eine Ansicht des assemblierten Lichtmoduls gemäß Fig. 1;
Fig. 4 eine Ansicht einer Optikvorrichtung des Lichtmoduls gemäß Fig. 1;
Fig. 5 eine Ansicht einer Kabelaufnahmevorrichtung; und
Fig. 6 eine weitere Ansicht der Kabelaufnahmevorrichtung.

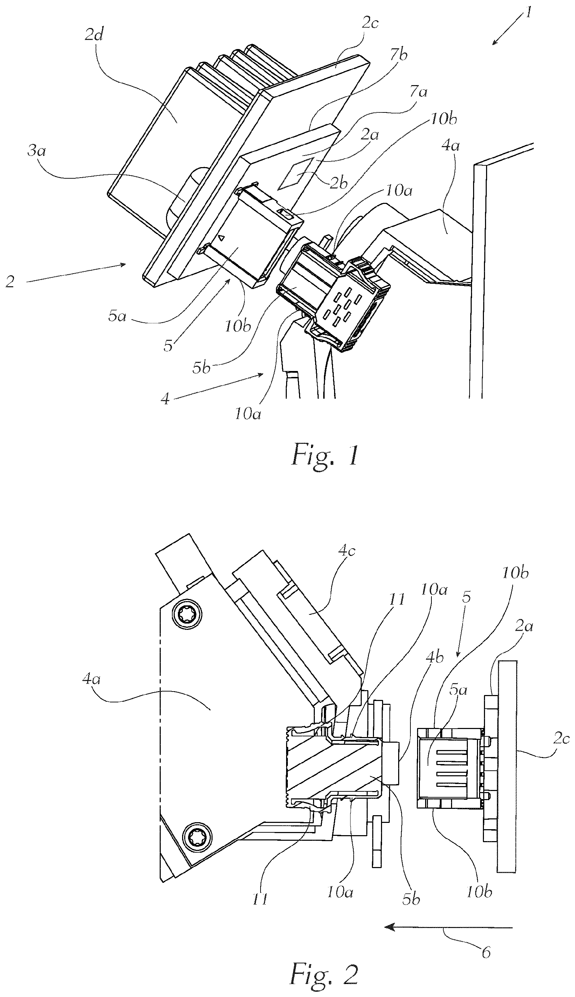

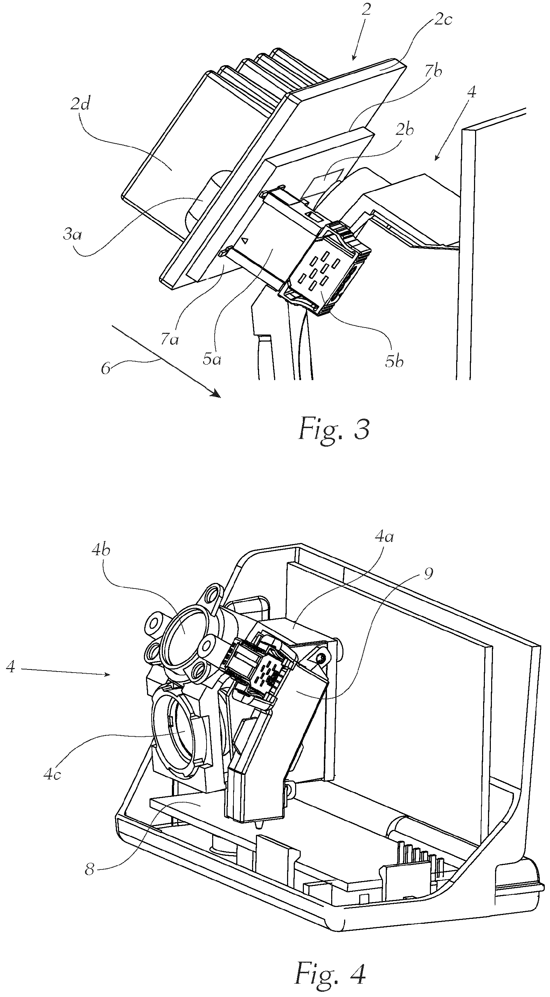

Fig. 1 und Fig. 2 zeigen verschiedene Ansichten eines nicht assemblierten Lichtmoduls 1. Die Assemblierung des Lichtmoduls 1 erfolgt durch ein Verfahren zur automatisierten Assemblierung des Lichtmoduls 1 mittels eines Assemblierungsroboters (nicht gezeigt). Fig. 1 und Fig. 2 zeigen jeweils den nicht assemblierten Zustand und Fig. 3 zeigt den assemblierten Zustand.

Das Lichtmodul 1 umfasst eine lichtemittierende Baugruppe 2. Die lichtemittierende Baugruppe 2 umfasst wiederum eine Leiterplatte 2a und ein Leuchtmittel 2b zur Erzeugung und Abstrahlung von Licht, wobei das Leuchtmittel 2b auf der Leiterplatte 2a angeordnet ist. Das Lichtmodul weist einen Trägerkörper 2c auf, auf welchem die Leiterplatte 2a angeordnet ist, wobei an dem Trägerkörper 2c ein erster Halteabschnitt 3a ausgebildet ist. Der erste Halteabschnitt 3a ist derart ausgestaltet und dazu eingerichtet, von einer Greifvorrichtung eines Assemblierungsroboters aufgegriffen zu werden. In dem gezeigten Ausführungsbeispiel umfasst der Trägerkörper 2c ein Kühlelement 2d zur Kühlung des Leuchtmittels 2b, wobei der erste Halteabschnitt 3a an dem Kühlelement 2d angeordnet ist.

In dem gezeigten Ausführungsbeispiels hat die Leiterplatte 2a der lichtemittierenden Baugruppe 2 eine Oberseite 7a und eine der Oberseite 7a gegenüberliegende Unterseite 7b. Das Leuchtmittel 2b und das Steckerelement 5a sind an der Oberseite 7a angeordnet und der Trägerkörper 2c (welcher das Kühlelement 2d aufweist) ist an der Unterseite 7b angeordnet.

Das Lichtmodul 1 umfasst eine Optikvorrichtung 4, welche dazu eingerichtet ist, aus dem Licht des Leuchtmittels 2b der lichtemittierenden Baugruppe 2 in einem assemblierten Zustand des Lichtmoduls (vgl. Fig. 3) zumindest eine Lichtfunktion zu bilden. Die Lichtfunktion kann ein Abblendlicht, ein Fernlicht, ein Fahrtrichtungsanzeigelicht, ein Warnlicht, o.Ä. umfassen. Die Optikvorrichtung 4 hat zur Ausbildung der zumindest einen Lichtfunktion zumindest ein optisch wirksames Element (nicht gezeigt), welches in einem Gehäuse 4a der Optikvorrichtung 4 aufgenommen ist. Das Gehäuse 4a hat einen Lichteintrittsbereich 4b, durch welchen von dem Leuchtmittel 2b abgestrahltes Licht in das Innere des Gehäuses 4a auf das zumindest eine optisch wirksame Element trifft und zur Ausbildung der zumindest einen Lichtfunktion mit dem zumindest einen optisch wirksamen Element wechselwirkt. Das Gehäuse 4a hat einen Lichtaustrittsbereich 4c, aus welchem das die zumindest eine Lichtfunktion ausbildende Licht, nach dessen Wechselwirkung mit dem zumindest einen optisch wirksamen Element austritt.

Das Lichtmodul 1 umfasst eine Steckvorrichtung 5, welche ein Steckerelement 5a und ein zu dem Steckerelement 5a korrespondierend ausgestaltetes Gegensteckerelement 5b aufweist. Das Steckerelement 5a ist in dem gezeigten Ausführungsbeispiel an der lichtemittierenden Baugruppe 2 und das Gegensteckerelement 5b an der Optikvorrichtung 4 angeordnet. Das Steckerelement 5a kann mit dem Gegensteckerelement 5b zur Befestigung der lichtemittierenden Baugruppe 2 an der Optikvorrichtung 4 in Eingriff gebracht werden.

Das Steckerelement 5a hat ein erstes Arretierungsmittel 10a und das Gegensteckerelement 5b hat ein zweites Arretierungsmittel 10b. Im zusammengesteckten Zustand der Steckvorrichtung 5a (Fig. 3) wirkt das erste Arretierungsmittel 10a mit dem zweiten Arretierungsmittel 10b derart zusammen, dass die Position der lichtemittierenden Baugruppe 2 relativ zu der Optikvorrichtung 4 fixiert ist.

Das erste Arretierungsmittel 10a ist in dem gezeigten Ausführungsbeispiel als Rastnase und das zweite Arretierungsmittel 10b als Rastnasenaufnahme ausgebildet. Alternativ dazu kann das erste Arretierungsmittel 10a als Rastnasenaufnahme und das zweite Arretierungsmittel 10b als Rastnase ausgebildet sein. Im zusammengesteckten Zustand der Steckvorrichtung 5 (also im assemblierten Zustand des Lichtmoduls 1) ist die Rastnase in der Rastnasenaufnahme aufgenommen, um die Position der lichtemittierenden Baugruppe 2 relativ zu der Optikvorrichtung 4 zu fixieren.

Die Rastnase des ersten Arretierungsmittels 10a oder des zweiten Arretierungsmittels 10b ist bevorzugt mit einem Federelement 11 derart vorgespannt, dass beim Zusammenstecken der Steckvorrichtung 5 durch den Assemblierungsroboter das Steckerelement 5a gegen die Federkraft des Federelements in das Gegensteckerelement 5b gesteckt wird, wobei im zusammengesteckten Zustand die Federkraft des Federelements 11 die Rastnase in die Rastnasenaufnahme drückt.

Um das Lichtmodul 1 mit dem erfindungsgemäßen Verfahren zu assemblieren, wird ein Assemblierungsroboter (nicht gezeigt) zur automatisierten Assemblierung des Lichtmoduls 1 bereitgestellt. Der Assemblierungsroboter hat eine Greifvorrichtung, wobei die Greifvorrichtung einen Greifabschnitt aufweist, welcher korrespondierend zu dem ersten Halteabschnitt 3a des Trägerkörpers 2c ausgebildet ist. An dieser Stelle sei erwähnt, dass einem Fachmann auf dem Gebiet der Automatisationstechnik im Allgemeinen die Ausgestaltung von Assemblierungsrobotern mit Greifvorrichtungen bekannt ist. Daher wird auf die technische Beschreibung des Assemblierungsroboters verzichtet.

Die Assemblierung des Lichtmoduls 1 erfolgt durch Befestigen der lichtemittierenden Baugruppe 2 an der Optikvorrichtung 4 durch den Assemblierungsroboter. Das Befestigen umfasst folgende Schritte:
* Aufgreifen der lichtemittierenden Baugruppe 2 mit der Greifvorrichtung, durch das in Eingriff bringen des Greifabschnitts der Greifvorrichtung mit dem ersten Halteabschnitt 3a des Trägerkörpers 2c;
* Positionieren der aufgegriffenen lichtemittierenden Baugruppe 2 an der Optikvorrichtung 4 derart, dass das Steckerelement 5a der lichtemittierenden Baugruppe 2 mit dem Gegensteckerelement 5b der Optikvorrichtung 4 in Eingriff gebracht werden kann (diese Position ist in den Fig. 1 und 2 gezeigt);
* Zusammenstecken der Steckvorrichtung 5 mittels des Assemblierungsroboters durch das in Eingriff bringen des Steckerelements 5a mit dem Gegensteckerelement 5b.

Während dem Zusammenstecken wird die lichtemittierenden Baugruppe 2 von der Greifvorrichtung gehalten und entlang einer Einsteckrichtung 6 bewegt. Im zusammengesteckten Zustand der Steckvorrichtung 5 ist das Steckerelement 5a (bzw. die lichtemittierende Baugruppe 2) in einer Endposition relativ zu dem Gegensteckerelement 5b (bzw. der Optikvorrichtung 4) angeordnet. Das Steckerelement 5a und das Gegensteckerelement 5b sind derart ausgestaltet und dazu eingerichtet, dass in der Endposition der Eingriff des Steckerelements 5a mit dem Gegensteckerelement 5b derart ist, dass die lichtemittierende Baugruppe 2 gegen eine Verschiebung entgegen der Einsteckrichtung 6 gesichert ist.

Wie in Fig. 4 gezeigt, ist in dem gezeigten Ausführungsbeispiel der Lichteintrittsbereich 4b des Gehäuses 4a als Lichteintrittsöffnung ausgestaltet, welche mit der lichtemittierenden Baugruppe 2 derart korrespondierend ausgebildet ist, dass im assemblierten Zustand des Lichtmoduls 1 mit dem Leuchtmittel 2b abgestrahltes Licht durch die Lichteintrittsöffnung hindurch auf das zumindest eine optisch wirksame Element trifft. Der Lichtaustrittsbereich 4c ist wiederum als Lichtaustrittsöffnung ausgestaltet. Das Lichtmodul 1 hat eine Steuervorrichtung 8, welche dazu eingerichtet ist, das zumindest eine optisch wirksame Element der Optikvorrichtung 4 sowie das Leuchtmittel 2b der lichtemittierenden Baugruppe 2 zur Ausbildung der zumindest einen Lichtfunktion anzusteuern. Die Steuervorrichtung 8 umfasst eine weitere Leiterplatte, welche insbesondere an dem Gehäuse 4a der Optikvorrichtung 4 befestigt ist.

Das Steckerelement 5a und das Gegensteckerelement 5b weisen jeweils elektrische Verbindungsmittel auf, welche dazu eingerichtet sind, im assemblierten Zustand einen elektrischen Kontakt zwischen der lichtemittierenden Baugruppe 2 und der Steuervorrichtung 8 herzustellen. Die Steuervorrichtung 8 ist mit dem Gegensteckerelement 5b über weitere elektrische Verbindungsmittel elektrisch verbunden, um im assemblierten Zustand des Lichtmoduls 1 Steuersignale an die Optikvorrichtung 4 und die lichtemittierende Baugruppe 2 zu senden.

Die weiteren elektrischen Verbindungsmittel sind innerhalb einer Kabelaufnahmevorrichtung 9 angeordnet, wobei die Kabelaufnahmevorrichtung 9 einen zweiten Halteabschnitt 3b aufweist, welcher derart ausgestaltet und dazu eingerichtet ist, mit der Greifvorrichtung des Assemblierungsroboters in Eingriff gebracht zu werden, um die Kabelaufnahmevorrichtung 9 mit der Greifvorrichtung aufzugreifen. Die Kabelaufnahmevorrichtung 9 ist an einer Gehäuseaußenseite des Gehäuses 4a angeordnet.

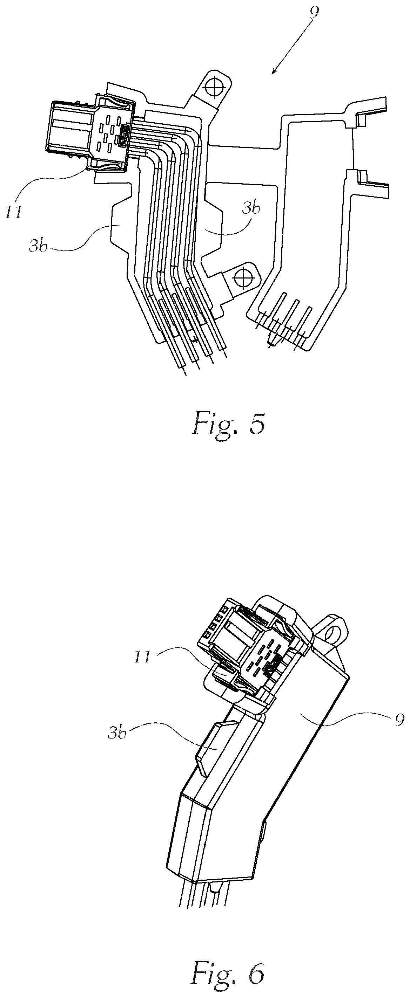

Die Fig. 5 und Fig. 6 zeigen Detailansichten der Kabelaufnahmevorrichtung 9. In Fig. 5 ist die Kabelaufnahmevorrichtung 9 in einem offenen Zustand gezeigt, sodass die weiteren elektrischen Verbindungsmittel darin erkennbar sind. Fig. 6 zeigt einen geschlossenen Zustand, wobei in diesem Zustand die Assemblierung der Kabelaufnahmevorrichtung 9 erfolgen kann.

Die Kabelaufnahmevorrichtung 9 hat eine bestimmte Festigkeit, welche einer vorgegebenen Griffkraft der Greifvorrichtung standhält. Dadurch ist ein Aufgreifen der Kabelaufnahmevorrichtung 9 mit der Greifvorrichtung unter Einwirkung der vorgegebenen Griffkraft beschädigungsfrei möglich. Der Assemblierungsroboter ist dazu eingerichtet, die aufgegriffene Kabelaufnahmevorrichtung 9 an dem Gehäuse 4a mittels eines Befestigungsmittels 11 zu assemblieren. Das Befestigungsmittel 11 kann als weiteres Steckerelement (oder Gegensteckerelement) einer weiteren Steckvorrichtung ausgestaltet sein.

Nach dem Positionieren der lichtemittierenden Baugruppe 2 an der Optikvorrichtung 4 und vor dem Zusammenstecken der Steckvorrichtung 5 durch den Assemblierungsroboter kann in einem optionalen Schritt die Position der lichtemittierenden Baugruppe 2 relativ zu der Optikvorrichtung mit einer Überprüfungsvorrichtung überprüft werden, und, wenn die Position von einer vorgegebenen Soll-Position abweicht, kann der Assemblierungsroboter die Position derart ändern, dass die Soll-Position eingenommen wird.

## Patentansprüche

1. Verfahren zur automatisierten Assemblierung eines Lichtmoduls (1) für einen Kraftfahrzeugscheinwerfer mittels eines Assemblierungsroboters, wobei das Verfahren die folgenden chronologischen Schritte umfasst:
a) Bereitstellen der folgenden Komponenten:
- eine lichtemittierenden Baugruppe (2), umfassend
* eine Leiterplatte (2a),
* ein Leuchtmittel (2b) zur Erzeugung und Abstrahlung von Licht, wobei das Leuchtmittel (2b) auf der Leiterplatte (2a) angeordnet ist,
* einen Trägerkörper (2c), auf welchem die Leiterplatte (2a) angeordnet ist, wobei an dem Trägerkörper (2c) ein erster Halteabschnitt (3a) ausgebildet ist, wobei der erste Halteabschnitt (3a) derart ausgestaltet und dazu eingerichtet ist, von einer Greifvorrichtung eines Assemblierungsroboters aufgegriffen zu werden,
- eine Optikvorrichtung (4), welche dazu eingerichtet ist, aus dem Licht des Leuchtmittels (2b) der lichtemittierenden Baugruppe (2) in einem assemblierten Zustand des Lichtmoduls (1) zumindest eine Lichtfunktion zu bilden, wobei die Optikvorrichtung (4) zur Ausbildung der zumindest einen Lichtfunktion zumindest ein optisch wirksames Element, welches in einem Gehäuse (4a) der Optikvorrichtung (4) aufgenommen ist, aufweist, wobei das Gehäuse (4a) einen Lichteintrittsbereich (4b) aufweist, durch welchen von dem Leuchtmittel (2b) abgestrahltes Licht in das Innere des Gehäuses (4a) auf das zumindest eine optisch wirksame Element trifft und zur Ausbildung der zumindest einen Lichtfunktion mit dem zumindest einen optisch wirksamen Element wechselwirkt, wobei das Gehäuse (4a) einen Lichtaustrittsbereich (4c) aufweist, aus welchem das die zumindest eine Lichtfunktion ausbildende Licht, nach dessen Wechselwirkung mit dem zumindest einen optisch wirksamen Element austritt,
- eine Steckvorrichtung (5), welche ein Steckerelement (5a) und ein zu dem Steckerelement (5a) korrespondierend ausgestaltetes Gegensteckerelement (5b) aufweist, wobei das Steckerelement (5a) an der lichtemittierenden Baugruppe (2) und das Gegensteckerelement (5b) an der Optikvorrichtung (4) angeordnet ist, wobei das Steckerelement (5a) mit dem Gegensteckerelement (5b) zur Befestigung der lichtemittierenden Baugruppe (2) an der Optikvorrichtung (4) in Eingriff gebracht werden kann,
**gekennzeichnet durch**
b) Bereitstellen eines Assemblierungsroboters zur automatisierten Assemblierung des Lichtmoduls (1), wobei der Assemblierungsroboter eine Greifvorrichtung aufweist, wobei die Greifvorrichtung einen Greifabschnitt aufweist, welcher korrespondierend zu dem ersten Halteabschnitt (3a) des Trägerkörpers (2c) ausgebildet ist,
c) Assemblierung des Lichtmoduls (1) durch Befestigen der lichtemittierenden Baugruppe (2) an der Optikvorrichtung (4) durch den Assemblierungsroboter, wobei das Befestigen folgende Schritte umfasst:
* Aufgreifen der lichtemittierenden Baugruppe (2) mit der Greifvorrichtung, durch das in Eingriff bringen des Greifabschnitts der Greifvorrichtung mit dem ersten Halteabschnitt (3a) des Trägerkörpers (2c),
* Positionieren der aufgegriffenen lichtemittierenden Baugruppe (2) an der Optikvorrichtung (4) derart, dass das Steckerelement (5a) der lichtemittierenden Baugruppe (2) mit dem Gegensteckerelement (5b) der Optikvorrichtung (4) in Eingriff gebracht werden kann,
* Zusammenstecken der Steckvorrichtung (5) mittels des Assemblierungsroboters durch das in Eingriff bringen des Steckerelements (5a) mit dem Gegensteckerelement (5b), wobei während dem Zusammenstecken die lichtemittierende Baugruppe (2) von der Greifvorrichtung gehalten und entlang einer Einsteckrichtung (6) bewegt wird, wobei im zusammengesteckten Zustand der Steckvorrichtung (5) das Steckerelement (5a) in einer Endposition relativ zu dem Gegensteckerelement (5b) angeordnet ist, wobei das Steckerelement (5a) und das Gegensteckerelement (5b) derart ausgestaltet und dazu eingerichtet sind, dass in der Endposition der Eingriff des Steckerelements (5a) mit dem Gegensteckerelement (5b) derart ist, dass die lichtemittierende Baugruppe (2) gegen eine Verschiebung entgegen der Einsteckrichtung (6) gesichert ist,
wobei das Lichtmodul (1) eine Steuervorrichtung (8) aufweist, welche dazu eingerichtet ist, das zumindest eine optisch wirksame Element der Optikvorrichtung (4) sowie das Leuchtmittel (2a) der lichtemittierenden Baugruppe (2) zur Ausbildung der zumindest einen Lichtfunktion anzusteuern,
wobei das Steckerelement (5a) und das Gegensteckerelement (5b) jeweils elektrische Verbindungsmittel aufweisen, welche dazu eingerichtet sind, im zusammengesteckten Zustand der Steckvorrichtung (5) einen elektrischen Kontakt zwischen der lichtemittierenden Baugruppe (2) und der Steuervorrichtung (8) herzustellen, wobei die Steuervorrichtung (8) mit dem Gegensteckerelement (5b) über weitere elektrische Verbindungsmittel elektrisch verbunden ist, um im assemblierten Zustand des Lichtmoduls (1) Steuersignale an die Optikvorrichtung (4) und die lichtemittierende Baugruppe (2) zu senden.

2. Verfahren nach Anspruch 1, wobei der Trägerkörper (2c) ein Kühlelement (2d) zur Kühlung des Leuchtmittels (2b) aufweist, wobei der erste Halteabschnitt (3a) an dem Kühlelement (2d) angeordnet ist.

3. Verfahren nach einem der vorhergehenden Ansprüche, wobei der Lichteintrittsbereich (4b) des Gehäuses (4a) als Lichteintrittsöffnung ausgestaltet ist, welche mit der lichtemittierenden Baugruppe (2) derart korrespondierend ausgebildet ist, dass im assemblierten Zustand des Lichtmoduls (1) mit dem Leuchtmittel (2b) abgestrahltes Licht durch die Lichteintrittsöffnung hindurch auf das zumindest eine optisch wirksame Element trifft.

4. Verfahren nach einem der vorhergehenden Ansprüche, wobei die Leiterplatte (2a) der lichtemittierenden Baugruppe (2) eine Oberseite (7a) und eine der Oberseite (7a) gegenüberliegende Unterseite (7b) aufweist, wobei das Leuchtmittel (2b) und das Steckerelement (5a) an der Oberseite (7a) angeordnet sind und der Trägerkörper (2c) an der Unterseite (7b) angeordnet ist.

5. Verfahren nach einem der vorhergehenden Ansprüche, wobei die Steuervorrichtung (8) eine weitere Leiterplatte umfasst, welche insbesondere an dem Gehäuse (4a) der Optikvorrichtung (4) befestigt ist.

6. Verfahren nach einem der vorhergehenden Ansprüche, wobei die weiteren elektrischen Verbindungsmittel innerhalb einer Kabelaufnahmevorrichtung (9) angeordnet sind, wobei die Kabelaufnahmevorrichtung (9) einen zweiten Halteabschnitt (3b) aufweist, welcher derart ausgestaltet und dazu eingerichtet ist, mit der Greifvorrichtung des Assemblierungsroboters in Eingriff gebracht zu werden, um die Kabelaufnahmevorrichtung (9) mit der Greifvorrichtung aufzugreifen.

7. Verfahren nach Anspruch 6, wobei die Kabelaufnahmevorrichtung (9) an einer Gehäuseaußenseite des Gehäuses (4a) angeordnet ist.

8. Verfahren nach Anspruch 6 oder 7, wobei die Kabelaufnahmevorrichtung (9) eine bestimmte Festigkeit aufweist, welche einer vorgegebenen Griffkraft der Greifvorrichtung standhält, sodass ein Aufgreifen der Kabelaufnahmevorrichtung (9) mit der Greifvorrichtung unter Einwirkung der vorgegebenen Griffkraft beschädigungsfrei möglich ist, wobei vorzugsweise der Assemblierungsroboter dazu eingerichtet ist, die aufgegriffene Kabelaufnahmevorrichtung (9) an dem Gehäuse (4a) mittels eines Befestigungsmittels zu assemblieren.

9. Verfahren nach einem der vorhergehenden Ansprüche, wobei das Steckerelement (5a) ein erstes Arretierungsmittel (10a) und das Gegensteckerelement (5b) ein zweites Arretierungsmittel (10b) aufweist, wobei im zusammengesteckten Zustand der Steckvorrichtung (5a) das erste Arretierungsmittel (10a) mit dem zweiten Arretierungsmittel (10b) derart zusammenwirkt, dass die Position der lichtemittierenden Baugruppe (2) relativ zu der Optikvorrichtung (4) fixiert ist.

10. Verfahren nach Anspruch 9, wobei das erste Arretierungsmittel (10a) als Rastnase und das zweite Arretierungsmittel (10b) als Rastnasenaufnahme ausgebildet ist, oder das erste Arretierungsmittel (10a) als Rastnasenaufnahme und das zweite Arretierungsmittel (10b) als Rastnase ausgebildet ist, wobei im zusammengesteckten Zustand der Steckvorrichtung (5) die Rastnase in der Rastnasenaufnahme aufgenommen ist, um die Position der lichtemittierenden Baugruppe (2) relativ zu der Optikvorrichtung (4) zu fixieren.

11. Verfahren nach Anspruch 10, wobei die Rastnase des ersten Arretierungsmittels (10a) oder des zweiten Arretierungsmittels (10b) mit einem Federelement (11) derart vorgespannt ist, dass beim Zusammenstecken der Steckvorrichtung (5) durch den Assemblierungsroboter das Steckerelement (5a) gegen die Federkraft des Federelements in das Gegensteckerelement (5b) gesteckt wird, wobei im zusammengesteckten Zustand die Federkraft des Federelements (11) die Rastnase in die Rastnasenaufnahme drückt.

12. Verfahren nach einem der vorhergehenden Ansprüche, wobei nach dem Positionieren der lichtemittierenden Baugruppe (2) an der Optikvorrichtung (4) und vor dem Zusammenstecken der Steckvorrichtung (5) durch den Assemblierungsroboter die Position der lichtemittierenden Baugruppe (2) relativ zu der Optikvorrichtung mit einer Überprüfungsvorrichtung überprüft wird, und, wenn die Position von einer vorgegebenen Soll-Position abweicht, der Assemblierungsroboter die Position derart ändert, dass die Soll-Position eingenommen wird.

## Claims

1. Method for the automated assembly of a light module (1) for a motor vehicle headlight using an assembly robot, wherein the method comprises the following chronological steps:
a) Providing the following components:
- a light-emitting assembly (2) comprising
* a printed circuit board (2a),
* a light source (2b) for generating and emitting light, wherein the light source (2b) is arranged on the printed circuit board (2a),
* a carrier body (2c) on which the printed circuit board (2a) is arranged, wherein a first holding section (3a) is formed on the carrier body (2c), wherein the first holding section (3a) is designed and arranged to be gripped by a gripping device of an assembly robot,
- an optical device (4) which is designed to form at least one light function from the light of the light source (2b) of the light-emitting assembly (2) in an assembled state of the light module (1), wherein the optical device (4) for forming the at least one light function comprising at least one optically effective element which is accommodated in a housing (4a) of the optical device (4), wherein the housing (4a) has a light entry region (4b) through which light emitted by the light source (2b) enters the interior of the housing (4a) onto the at least one optically effective element and interacts with the at least one optically effective element to form the at least one light function, wherein the housing (4a) has a light exit area (4c) from which the light forming the at least one light function exits after its interaction with the at least one optically effective element,
- a plug device (5) which has a plug element (5a) and a mating plug element (5b) designed to correspond to the plug element (5a), wherein the plug element (5a) is arranged on the light-emitting assembly (2) and the mating plug element (5b) is arranged on the optical device (4), wherein the plug element (5a) can be engaged with the mating plug element (5b) to secure the light-emitting assembly (2) to the optical device (4),
**characterized by**
b) providing an assembly robot for automated assembly of the light module (1), wherein the assembly robot has a gripping device, wherein the gripping device has a gripping section which is formed corresponding to the first holding section (3a) of the carrier body (2c),
c) assembling the light module (1) by attaching the light-emitting assembly (2) to the optical device (4) by the assembly robot, wherein the attaching comprises the following steps:
* grasping the light-emitting assembly (2) with the gripping device by engaging the gripping section of the gripping device with the first holding section (3a) of the carrier body (2c),
* positioning the gripped light-emitting assembly (2) on the optical device (4) in such a way that the plug element (5a) of the light-emitting assembly (2) can be engaged with the mating plug element (5b) of the optical device (4),
* assembly of the plug device (5) by means of the assembly robot by engaging the plug element (5a) with the mating plug element (5b), wherein during assembly the light-emitting assembly (2) is held by the gripping device and moved along an insertion direction (6), wherein in the assembled state of the plug device (5) the plug element (5a) is arranged in an end position relative to the mating plug element (5b), wherein the plug element (5a) and the mating plug element (5b) are designed and arranged such that, in the end position, the engagement of the plug element (5a) with the mating connector element (5b) is such that the light-emitting assembly (2) is secured against displacement in the opposite direction to the insertion direction (6),
wherein the light module (1) has a control device (8) which is designed to control the at least one optically effective element of the optical device (4) and the light source (2a) of the light-emitting assembly (2) to form the at least one light function,
wherein the plug element (5a) and the mating plug element (5b) each have electrical connection means which are arranged to establish electrical contact between the light-emitting assembly (2) and the control device (8) when the plug device (5) is plugged together, wherein the control device (8) is electrically connected to the mating plug element (5b) via further electrical connecting means in order to send control signals to the optical device (4) and the light-emitting assembly (2) when the light module (1) is assembled.

2. Method according to claim 1, wherein the carrier body (2c) has a cooling element (2d) for cooling the light source (2b), wherein the first retaining section (3a) is arranged on the cooling element (2d).

3. Method according to one of the preceding claims, wherein the light entry area (4b) of the housing (4a) is designed as a light entry opening which is formed to correspond to the light-emitting assembly (2) in such a way that, in the assembled state of the light module (1) with the light source (2b) passes through the light entry opening and strikes the at least one optically effective element.

4. Method according to one of the preceding claims, wherein the printed circuit board (2a) of the light-emitting assembly (2) has an upper side (7a) and a lower side (7b) opposite the upper side (7a), wherein the light source (2b) and the plug element (5a) are arranged on the upper side (7a) and the carrier body (2c) is arranged on the lower side (7b).

5. Method according to one of the preceding claims, wherein the control device (8) comprises a further printed circuit board which is attached in particular to the housing (4a) of the optical device (4).

6. Method according to one of the preceding claims, wherein the further electrical connection means are arranged within a cable receiving device (9), wherein the cable receiving device (9) has a second holding section (3b) which is designed and arranged to be engaged with the gripping device of the assembly robot in order to pick up the cable receiving device (9) with the gripping device.

7. Method according to claim 6, wherein the cable receiving device (9) is arranged on an outer side of the housing (4a).

8. Method according to claim 6 or 7, wherein the cable holding device (9) has a certain strength that can withstand a predetermined gripping force of the gripping device, so that the cable holding device (9) can be picked up without damage by the gripping device under the influence of the predetermined gripping force, wherein the assembly robot is preferably designed to assemble the gripped cable holding device (9) to the housing (4a) by means of a fastening device.

9. Method according to one of the preceding claims, wherein the plug element (5a) has a first locking means (10a) and the counter plug element (5b) has a second locking means (10b), wherein, in the connected state of the plug device (5a), the first locking means (10a) interacts with the second locking means (10b) in such a way that the position of the light-emitting assembly (2) relative to the optical device (4) is fixed.

10. Method according to claim 9, wherein the first locking means (10a) is designed as a locking tab and the second locking means (10b) is designed as a locking tab receptacle, or the first locking means (10a) is designed as a snap-in receptacle and the second locking means (10b) is designed as a snap-in tab, wherein, when the plug-in device (5) is in the plugged-in state, the snap-in tab is received in the snap-in receptacle in order to fix the position of the light-emitting assembly (2) relative to the optical device (4).

11. Method according to claim 10, wherein the locking nose of the first locking means (10a) or the second locking means (10b) is preloaded with a spring element (11) in such a way that, when the plug-in device (5) by the assembly robot, the plug element (5a) is inserted into the mating plug element (5b) against the spring force of the spring element, wherein, in the connected state, the spring force of the spring element (11) presses the locking tab into the locking tab receptacle.

12. Method according to one of the preceding claims, wherein, after positioning the light-emitting assembly (2) on the optical device (4) and before the plug-in device (5) is plugged in by the assembly robot, the position of the light-emitting assembly (2) relative to the optical device is checked using a checking device, and if the position deviates from a predetermined target position, the assembly robot changes the position so that the target position is reached.

## Revendications

1. Procédé d'assemblage automatisé d'un module d'éclairage (1) pour un phare de véhicule automobile à l'aide d'un robot d'assemblage, le procédé comprenant les étapes chronologiques suivantes :
a) mise à disposition des composants suivants :
- un module émetteur de lumière (2) comprenant
* une carte de circuit imprimé (2a),
* un moyen d'éclairage (2b) pour produire et émettre de la lumière, le moyen d'éclairage (2b) étant disposé sur la carte de circuit imprimé (2a),
* un corps de support (2c) sur lequel est disposée la carte de circuit imprimé (2a), une première partie de maintien (3a) étant formée sur le corps de support (2c), la première partie de maintien (3a) étant conçue et agencée de manière à être saisie par un dispositif de préhension d'un robot d'assemblage,
- un dispositif optique (4) qui est conçu pour former au moins une fonction lumineuse à partir de la lumière de la source lumineuse (2b) du module émetteur de lumière (2) dans un état assemblé du module lumineux (1), le dispositif optique (4) pour former la au moins une fonction lumineuse, au moins un élément optiquement actif qui est logé dans un boîtier (4a) du dispositif optique (4), le boîtier (4a) présentant une zone d'entrée de lumière (4b) à travers laquelle la lumière émise par la source lumineuse (2b) frappe l'intérieur du boîtier (4a) sur au moins un élément optiquement actif et interagit avec au moins un élément optiquement actif pour former au moins une fonction lumineuse, le boîtier (4a) comportant une zone de sortie de lumière (4c) à partir de laquelle la lumière formant au moins une fonction lumineuse sort après son interaction avec au moins un élément optiquement actif,
- un dispositif de connexion (5) qui présente un élément de connexion (5a) et un élément de connexion complémentaire (5b) conçu de manière à correspondre à l'élément de connexion (5a), l'élément de connexion (5a) étant disposé sur le module émetteur de lumière (2) et l'élément de contre-connecteur (5b) étant disposé sur le dispositif optique (4), l'élément de connecteur (5a) pouvant être mis en prise avec l'élément de contre-connecteur (5b) pour fixer le module émetteur de lumière (2) au dispositif optique (4),
**caractérisé par**
b) la mise à disposition d'un robot d'assemblage pour l'assemblage automatisé du module d'éclairage (1), le robot d'assemblage comportant un dispositif de préhension, le dispositif de préhension comportant une partie de préhension qui est formée de manière à correspondre à la première partie de maintien (3a) du corps de support (2c),
c) assemblage du module d'éclairage (1) par fixation de l'ensemble émetteur de lumière (2) au dispositif optique (4) par le robot d'assemblage, la fixation comprenant les étapes suivantes :
* saisir l'ensemble émetteur de lumière (2) avec le dispositif de préhension, en engageant la partie de préhension du dispositif de préhension avec la première partie de maintien (3a) du corps de support (2c),
* positionnement de l'ensemble émetteur de lumière (2) saisi sur le dispositif optique (4) de telle sorte que l'élément de connexion (5a) de l'ensemble émetteur de lumière (2) puisse être mis en prise avec l'élément de connexion complémentaire (5b) du dispositif optique (4),
* assemblage du dispositif de connexion (5) à l'aide du robot d'assemblage en engageant l'élément de connexion (5a) avec l'élément de connexion complémentaire (5b), l'ensemble émetteur de lumière (2) étant maintenu par le dispositif de préhension et déplacé le long d'une direction d'insertion (6) pendant l'assemblage, l'élément de connexion (5a) étant disposé dans une position d'extrémité par rapport à l'élément de connexion complémentaire (5b) à l'état assemblé du dispositif de connexion (5), l'élément de connexion (5a) est disposé dans une position finale par rapport à l'élément de connexion complémentaire (5b), l'élément de connexion (5a) et l'élément de connexion complémentaire (5b) étant conçus et agencés de telle sorte que, dans la position finale, l'engagement de l'élément de connexion (5a) avec l'élément de contre-connecteur (5b) est telle que le module optique (2) est bloqué contre un déplacement dans le sens opposé au sens d'insertion (6),
le module d'éclairage (1) comportant un dispositif de commande (8) qui est conçu pour commander au moins un élément optiquement actif du dispositif optique (4) ainsi que le moyen d'éclairage (2a) du module émetteur de lumière (2) afin de former au moins une fonction d'éclairage,
l'élément de connecteur (5a) et l'élément de contre-connecteur (5b) comportant chacun des moyens de connexion électrique qui sont agencés pour établir, lorsque le dispositif de connexion (5) est assemblé, un contact électrique entre le module émetteur de lumière (2) et le dispositif de commande (8), le dispositif de commande (8) étant relié électriquement à l'élément de contre-connecteur (5b) par d'autres moyens de connexion électriques afin d'envoyer des signaux de commande au dispositif optique (4) et au module émetteur de lumière (2) lorsque le module d'éclairage (1) est assemblé.

2. Procédé selon la revendication 1, dans lequel le corps de support (2c) comporte un élément de refroidissement (2d) pour refroidir la source lumineuse (2b), la première partie de retenue (3a) étant disposée sur l'élément de refroidissement (2d).

3. Procédé selon l'une des revendications précédentes, dans lequel la zone d'entrée de lumière (4b) du boîtier (4a) est conçue comme une ouverture d'entrée de lumière qui est formée de manière à correspondre à l'ensemble émetteur de lumière (2) de telle sorte que, lorsque le module d'éclairage (1) est assemblé (1) avec le moyen d'éclairage (2b) traverse l'ouverture d'entrée de lumière pour atteindre au moins un élément optiquement actif.

4. Procédé selon l'une des revendications précédentes, dans lequel la carte de circuit imprimé (2a) du module émetteur de lumière (2) présente une face supérieure (7a) et une face inférieure (7b) opposée à la face supérieure (7a), dans lequel le moyen d'éclairage (2b) et l'élément de connexion (5a) sont disposés sur la face supérieure (7a) et le corps de support (2c) est disposé sur la face inférieure (7b).

5. Procédé selon l'une des revendications précédentes, le dispositif de commande (8) comprenant une autre carte de circuit imprimé qui est notamment fixée au boîtier (4a) du dispositif optique (4).

6. Procédé selon l'une des revendications précédentes, dans lequel les autres moyens de connexion électrique sont disposés à l'intérieur d'un dispositif de réception de câble (9), le dispositif de réception de câble (9) comportant une deuxième partie de retenue (3b) qui est conçue et agencée de manière à pouvoir être mise en prise avec le dispositif de préhension du robot d'assemblage afin de saisir le dispositif de réception de câbles (9) avec le dispositif de préhension.

7. Procédé selon la revendication 6, dans lequel le dispositif de réception de câbles (9) est disposé sur un côté extérieur du boîtier (4a).

8. Procédé selon la revendication 6 ou 7, dans lequel le dispositif de réception de câble (9) présente une résistance déterminée qui résiste à une force de préhension prédéfinie du dispositif de préhension, de sorte qu'il est possible de saisir le dispositif de réception de câble (9) avec le dispositif de préhension sous l'effet de la force de préhension prédéfinie sans l'endommager, le robot d'assemblage étant de préférence conçu pour assembler le dispositif de réception de câble (9) saisi sur le boîtier (4a) à l'aide d'un moyen de fixation.

9. Procédé selon l'une des revendications précédentes, dans lequel l'élément de connexion (5a) comporte un premier moyen de verrouillage (10a) et l'élément de connexion complémentaire (5b) comporte un deuxième moyen de verrouillage (10b), dans lequel, à l'état assemblé du dispositif de connexion (5a), le premier moyen de verrouillage (10a) coopère avec le deuxième moyen de blocage (10b) de telle sorte que la position du module émetteur de lumière (2) par rapport au dispositif optique (4) est fixée.

10. Procédé selon la revendication 9, dans lequel le premier moyen de blocage (10a) est conçu comme un ergot d'encliquetage et le deuxième moyen de blocage (10b) comme un logement d'ergot d'encliquetage, ou le premier moyen de blocage (10a) est conçu comme un logement pour ergots d'encliquetage et le deuxième moyen de blocage (10b) comme un ergot d'encliquetage, l'ergot d'encliquetage étant logé dans le logement pour ergots d'encliquetage lorsque le dispositif d'enfichage (5) est assemblé afin de fixer la position du module émetteur de lumière (2) par rapport au dispositif optique (4).

11. Procédé selon la revendication 10, dans lequel le nez d'encliquetage du premier moyen de blocage (10a) ou du deuxième moyen de blocage (10b) est précontraint par un élément à ressort (11) de telle sorte que, lors de l'assemblage du dispositif d'enfichage (5) par le robot d'assemblage, l'élément de connexion (5a) est enfiché dans l'élément de connexion complémentaire (5b) contre la force élastique de l'élément à ressort, la force élastique de l'élément à ressort (11) pressant le tenon d'encliquetage dans le logement de tenon d'encliquetage à l'état enfiché.

12. Procédé selon l'une des revendications précédentes, dans lequel, après le positionnement du module émetteur de lumière (2) sur le dispositif optique (4) et avant l'assemblage du dispositif enfichable (5) par le robot d'assemblage, la position du module émetteur de lumière (2) par rapport au dispositif optique est vérifiée à l'aide d'un dispositif de contrôle et, si la position s'écarte d'une position de consigne prédéfinie, le robot d'assemblage modifie la position de manière à ce que la position de consigne soit atteinte.
